# EUROPEAN PATENT APPLICATION

(11) **EP 4 478 236 A1**
(43) Date of publication of application: **18.12.2024**
(21) Application number: 24180884.9
(22) Date of filing: 07.06.2024
(51) Int. Cl.: G06F 30/15, G06F 30/20, G06F 30/27, G06F 113/12

(54) **SIMULATION MODELS FOR PREDICTING DEBRIS-RELATED PROPERTIES OF A PRODUCT-UNDER-DEVELOPMENT OPERATING IN A HARD-TO-PREDICT ENVIRONMENT**

(30) Priority: 15.06.2023 US 202318335467
(71) Applicant: Hamilton Sundstrand Space Systems International, Inc., Windsor Locks, CT 06096 (US)
(72) Inventor: WU, Peggy, Ellicott City, 21042 (US); Al-NADAWI, Yasir, Vernon, 06066 (US)
(74) Representative: Dehns

(57) **Abstract**

A computer system includes a processor system electronically coupled to a memory. The processor system performs processor system operations that include accessing configuration information of a product-under-development (PUD). The configuration information of the PUD is provided to one or more physics-informed simulation models (PISMs) of the processor system. The one or more PISMs are used to predict debris-related properties of the PUD operating in an environment.

## Description

### BACKGROUND

Exemplary embodiments pertain to the art of computer-aided design and, in particular, to computer-based simulation models for predicting debris-related properties of a product-under-development (PUD) operating in a hard-to-predict environment.

Computer-aided design (CAD) is the use of computer-based software to aid in design processes. CAD software is used by engineers and designers to create two-dimensional (2D) drawings or three-dimensional (3D) PUD models. A purpose of CAD is to optimize and streamline the designer's workflow, increase productivity, improve the quality and level of detail in the design, improve documentation communications, and often contribute toward a manufacturing design database. CAD software outputs can be in the form of electronic files, which are used for manufacturing and/or fabrication processes. CAD can be used in tandem with digitized manufacturing/fabrication processes known as computer-aided manufacturing (CAM) processes. Computer-aided design/computer-aided manufacturing (CAD/CAM) software can be used to design a variety of products such as electronic circuit boards in computers and other devices.

CAD software can include CAD simulation functionality that allows virtual experiments to be performed on a PUD model instead of a physical prototype of the PUD. Conventional CAD simulations determine electronically (or virtually) how relatively predictable stressors (e.g., high heat conditions, load stress, physical pressure, etc.) in a relatively simple and predictable virtual environment impact a PUD model. However, known CAD software and CAD simulation software are not designed to simulate how a PUD model responds to a full range of multi-factor stressors that occur in unique and hard-to-predict environments, including, for example, exposure to the multi-factor stressors that exist in a tornado, in a hurricane, or in space. The exploration of the Moon and the establishment of lunar bases pose several unique and hard-to-predict challenges, one of which is the need for humans and equipment to interact with a lunar surface that is covered by a layer of unconsolidated debris called lunar regolith (dust). Lunar regolith or lunar dust is abrasive like sandpaper, jagged like volcanic ash, and clings like fire soot. The fine, abrasive nature of lunar dust and its ability to adhere to surfaces can cause damage to equipment, reduce the efficiency of solar panels, and pose health risks to astronauts.

Extravehicular mobility units (EMUs) have been developed to assist with protecting astronauts (or other users) from the potential negative impact of space environments, including specifically lunar regolith. An EMU is an independent anthropomorphic system that provides environmental protection, mobility, life support and communication for astronauts or crewmembers to perform extravehicular activity (EVA) in earth orbit. EMUs are elaborate "suits" worn by astronauts and include, for example, a helmet and full body suit supplied by an oxygen tank, all of which maintain an environment that sustains the astronaut.

The exploration and development of materials and components (e.g., EMUs) that can be effectively and efficiently used in unique and hard-to-predict environments (e.g., space) would be enhanced by systems and methods that enable predictions (e.g., through simulation) of various material and component properties (e.g., lunar dust adherence properties) of a PUD operating in a unique and hard-to-predict environment such as space.

### BRIEF DESCRIPTION

Disclosed is a computer system that includes a processor system electronically coupled to a memory. The processor system performs processor system operations that include accessing configuration information of a product-under-development (PUD). The configuration information of the PUD is provided to one or more physics-informed simulation models (PISMs) of the processor system. The one or more PISMs are used to predict debris-related properties of the PUD operating in an environment.

In addition to one or more of the features described herein, the environment includes a hard-to-predict environment having multi-factor stressors including debris.

In addition to one or more of the features described herein, the debris is circulating and includes multiple debris types.

In addition to one or more of the features described herein, the processor system operations further include computer-aided-design (CAD) operations that simulate the debris-related properties of the PUD in the environment.

In addition to one or more of the features described herein, the environment includes a hard-to-predict environment having multi-factor stressors including debris.

In addition to one or more of the features described herein, the debris includes multiple debris types.

In addition to one or more of the features described herein, the debris-related properties of the PUD in the environment include a score representing how difficult it would be for a cleaning system to remove some or all of debris present on the PUD.

Also disclosed is a computer-implemented method that includes accessing, using a processor system, configuration information of a PUD. The configuration information of the PUD is provided to one or more physics-informed simulation models (PISMs) of the processor system. The one or more PISMs are used to predict debris-related properties of the PUD operating in an environment.

In addition to one or more of the features described herein, the environment includes a hard-to-predict environment having multi-factor stressors including debris.

In addition to one or more of the features described herein, the debris is circulating and includes multiple debris types.

In addition to one or more of the features described herein, the processor system operations further include computer-aided-design (CAD) operations that simulate the debris-related properties of the PUD in the environment.

In addition to one or more of the features described herein, the environment includes a hard-to-predict environment having multi-factor stressors including debris; and the debris includes multiple debris types.

In addition to one or more of the features described herein, the debris-related properties of the PUD in the environment include a score representing how difficult it would be for a cleaning system to remove some or all of debris present on the PUD.

Also disclosed is a computer system including a processor system electronically coupled to a memory. The processor system performs processor system operations that include accessing configuration information of a PUD, wherein the PUD includes an extravehicular mobility unit (EMU). The configuration information of the EMU is provided to one or more physics-informed simulation models (PISMs) of the processor system. The one or more PISMs are used to predict debris-related properties of the EMU in a space environment.

In addition to one or more of the features described herein, the space environment includes a hard-to-predict space environment having multi-factor stressors including debris.

In addition to one or more of the features described herein, the debris is circulating and includes lunar regolith.

In addition to one or more of the features described herein, the processor system operations further include computer-aided-design (CAD) operations that simulate the debris-related properties of the EMU in the space environment.

In addition to one or more of the features described herein, the space environment includes a hard-to-predict space environment having multi-factor stressors including debris; and the debris includes lunar regolith.

In addition to one or more of the features described herein, the debris-related properties of the EMU in the space environment include a score representing how difficult it would be for a cleaning system to remove some or all of debris from the EMU.

In addition to one or more of the features described herein, the one or more PISMs include a generative adversarial network having a physics-informed generator and a multimodal discriminator.

### BRIEF DESCRIPTION OF THE DRAWINGS

The following descriptions should not be considered limiting in any way. With reference to the accompanying drawings, like elements are numbered alike:
FIG. 1 is a simplified block diagram illustrating a system in accordance with embodiments of the disclosure;
FIG. 2 is a simplified block diagram illustrating a system in accordance with embodiments of the disclosure;
FIG. 3 is a simplified block diagram illustrating a configuration of a cleaning chamber in accordance with embodiments of the disclosure;
FIG. 4 is a diagram illustrating an exemplary EMU-type PUD in accordance with embodiments of the disclosure;
FIG. 5 is a diagram illustrating another configuration of a cleaning chamber operable to utilize embodiments of the disclosure;
FIG. 6 is a diagram illustrating a lunar environment in accordance with embodiments of the disclosure;
FIG. 7 depicts a non-limiting example of simulation model outputs in accordance with embodiments of the disclosure;
FIG. 8 depicts a non-limiting example of simulation model outputs in accordance with embodiments of the disclosure; and
FIG. 9 is a simplified block diagram illustrating a computing system operable to implement embodiments of the disclosure.

### DETAILED DESCRIPTION

A detailed description of one or more embodiments of the disclosed apparatus and method are presented herein by way of exemplification and not limitation with reference to the Figures.

Exemplary embodiments of the disclosure provide computer systems and related methods that implement a computer-based simulation system having multivariate simulation models for predicting debris-related properties of a PUD operating in a unique and hard-to-predict environment. In some embodiment of the disclosure, the debris is circulating and includes multiple debris types. In some embodiments of the disclosure, the PUD is various structures, components, equipment, and related materials used in space exploration. In some embodiments of the disclosure, the PUD is an EMU, and the debris is lunar regolith. An EMU (or spacesuit) worn or occupied by an astronaut performing an EVA (for example, lunar surface exploration) is exposed to unconsolidated debris called lunar regolith (dust). Lunar regolith is abrasive like sandpaper, jagged like volcanic ash, and clings like fire soot. The multivariate simulation models are operable to model the PUD/EMU, the lunar environment (including the debris expected to be present in the lunar environment), debris-related properties of the PUD, and a cleaning system operable to remove lunar regolith from the EMUs before the astronaut removes or exits the EMU. The simulation models receive parameters of the relevant environment, along with a proposed configuration of PUD. These inputs and the models are used to simulate how the lunar regolith will interact with the PUD (e.g., level of regolith adherence to the PUD) while the PUD is performing tasks in the environment, as well as simulate how efficiently and effectively the lunar regolith can be cleaned from PUD. The simulation system generates outputs in several forms (e.g., 2D and 3D video simulations; maps; scores; and the like) that facilitate a user understanding how debris-related properties of the PUD will perform.

In some embodiments of the disclosure, the models of the simulation system use a generative artificial intelligence approach combined with physics-based modeling to simulate the adherence and other properties of lunar regolith particulates with respect to the EMU based on an astronaut (or other user) using the EMU to perform different types of tasks, such as different types of EVA tasks. The models of the lunar dust properties, environmental parameters (such as gravity, air pressure), as well as models of different EMU configurations serve as input to the system. EMU configurations include different types of materials used in different parts of the EMU. The simulation system controls the movement of the EMU to mimic different tasks and reports back the amount of regolith that adhered to different parts of the EMU. Accordingly, embodiments of the disclosure enable the use of computer simulation to virtually explore and develop materials and components (e.g., EMUs) that can be effectively and efficiently used in unique and hard-to-predict environments (e.g., space) by predicting lunar-dust-related properties of various materials, equipment, and components of a PUD/EMU operating in a unique and hard-to-predict environment such as space.

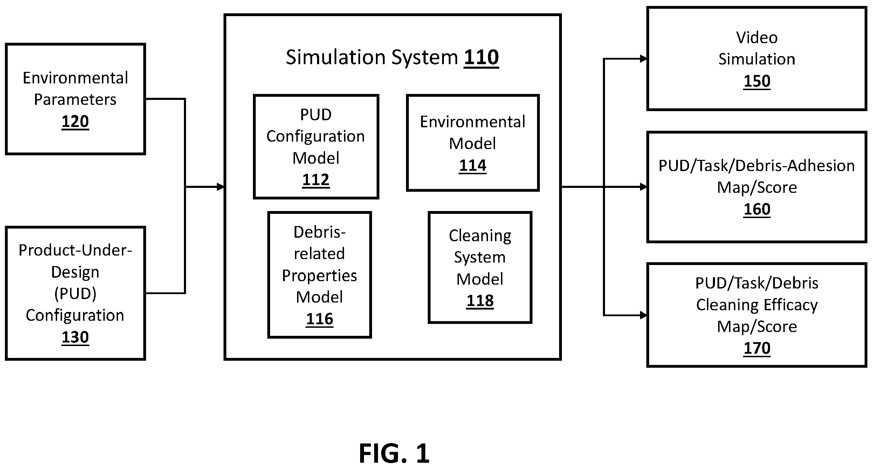

Turning now to a more detailed description of aspects of the disclosure, FIG. 1 depicts a simplified block diagram illustrating a simulation system 110 in accordance with embodiments of the disclosure. The simulation system 110 includes a PUD configuration model 112, an environmental model 114, a debris-related properties model 116, and a cleaning system model 118, configured and arranged as shown. Inputs to the simulation system 110 include environmental parameters 120 representing an environment in which the PUD will operate, along with a proposed PUD configuration 130. In embodiments of the disclosure, the environment in which the PUD will operate includes a full range of multi-factor stressors that occur in unique and hard-to-predict environments, including, for example, exposure to the multi-factor stressors that exist in a tornado, in a hurricane, or in space. Outputs generated by the simulation system 110 include, for example video simulations 150, which can include 2D and/or 3D video simulations of the PUD performing one or more user-selected tasks in the environment and the video images showing the debris contamination results of the PUD interacting with the debris in the environment while performing the task. The video simulations 150 can further include the debris-exposed PUD interacting with a cleaning system to provide an indication of the effort that will be required to clean the PUD. The outputs generated by the simulation system 110 can further include generated maps and/or scores 160 that provide a numerical representation of the debris contamination results of the PUD interacting with the debris in the environment while performing the task. The outputs generated by the simulation system 110 can further generate maps and/or scores 170 that provide a numerical representation of the cleaning efficacy of a modeled cleaning system in removing the debris contamination that results from the PUD interacting with the debris in the environment while performing the task.

In some embodiments of the disclosure, the video simulations 150 can be virtual reality (VR) simulations that facilitate the selection (e.g., by a user of the simulation system 110) of various interaction scenarios for the model of the PUD. VR videos are often referred to as 360-degree videos, immersive videos, or spherical videos. In general 360-degree videos are video recordings where a view in every direction is recorded at the same time using, for example, an omnidirectional camera or a collection of cameras. An immersive 360-degree video system can be implemented as a computer system operable to generate and display immersive 360-degree video images that simulate a real world experience. A person can enter and leave the simulated real world experience at any time using technology. The basic components of a 360-degree video system include a display; a computing system; and various feedback components that provide inputs from the user to the computing system. In embodiments of the disclosure, basic components of the 360-degree video system are included within and represented by the simulation system 110.

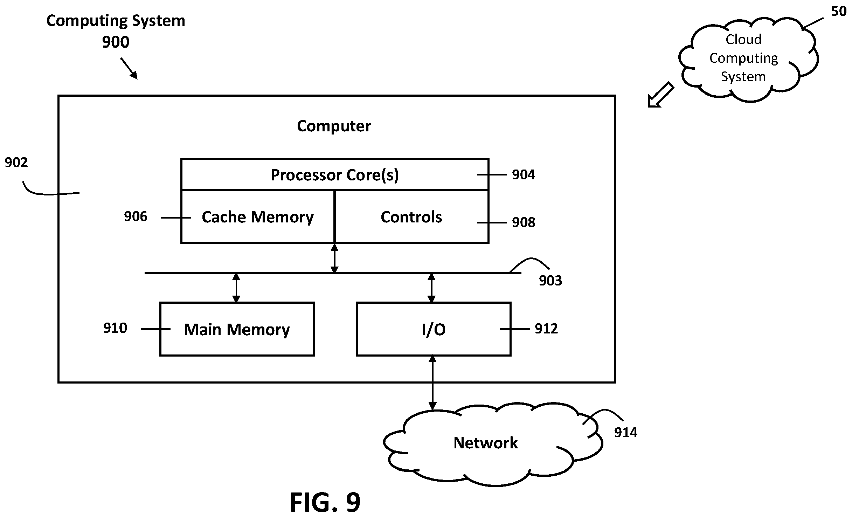

A cloud computing system 50 (shown in FIG. 9) can be in wired or wireless electronic communication with the simulation system 110. The cloud computing system 50 can supplement, support or replace some or all of the functionality of the various components of the simulation system 110. Additionally, some or all of the functionality of the simulation system 110 can be implemented as a node of the cloud computing system 50.

Operation of the simulation system 110 will now be described by way of an example. A designer/user develops a proposed new EMU design having materials and a configuration that the designer/user believes will have less lunar regolith adherence and be easier to clean than known EMUs. The designer/user loads electronic data representing expected features and functionality of the proposed EMU design into the simulation system 110 as the PUD configuration 130. For example a portion of the EMU can be formed from a flexible cloth material having a selected thickness and various specifications, all of which can be included in the electronic data representing the features and functionality of the proposed EMU design. The designer/user also loads electronic data representing the environmental parameters 120 of the environment in which the proposed EMU design will be simulated. In some embodiments of the disclosure, the environment parameters 120 can be selected from a menu presented by the simulation system 110. For example, the environmental parameters 120 can represent the parameters of a region of the Moon where various lunar exploration are expected to take place on a future lunar mission. The designer/user also selects one or more EVA tasks to be performed by an astronaut (or other user) wearing or occupying the EMU. The simulation system 110 uses the models 112, 114, 116 to simulate the astronaut performing the tasks in the proposed EMU design, and the models 112, 114, 116 work in tandem to predict the amount, location, and type of lunar regolith that would be on the EMU after the tasks are completed. The simulation system 110 further uses the model 118 to simulate the cleaning effort that would be required from the modeled cleaning system to remove the amount, location, and type of lunar regolith that is predicted to be on the EMU after the tasks are completed. The results of the simulation can be output as the video simulations 150 and/or the maps/scores 160, 170, which are previously described herein. In aspects of the disclosure, the simulation system 110 includes a full range of CAD functionality that allows the designer/user to adjust one or more simulation parameters (e.g., add a protective coating to the EMU helmet and glass shield; increase or decrease a thickness of a material in the proposed EMU design) and rerun the simulation to evaluate how the changed parameters impact the simulation results. In embodiments of the disclosure, the computer/processor system (e.g., computer system 900 shown in FIG. 9) used to implement the simulation system 110 can store the results from various EMU design simulations and generate visual comparisons of the various EMU designs and their results for display through a display component of the I/O 912 (shown in FIG. 9). In some embodiments of the disclosure, the simulation system 110A can include recommender functionality that automatically compares the various simulations and design parameters to identify design areas that can be optimized to achieve a target goal of the proposed EMU design. The recommender functionality can present such recommendations to the user through the I/O 912. The recommender functionality can be implemented using machine learning and natural language processing algorithms trained to perform a task (e.g., identifying EMU design parameters in the various simulations that optimize/minimize lunar regolith adherence properties of the overall EMU).

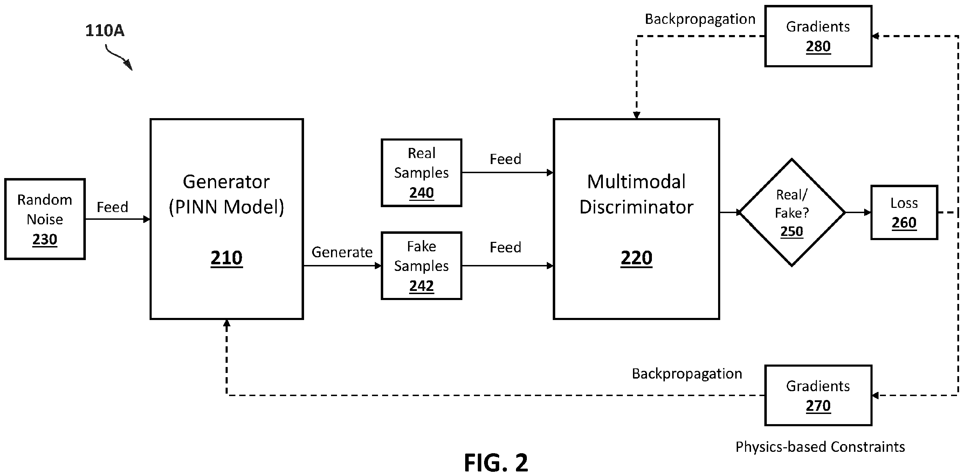

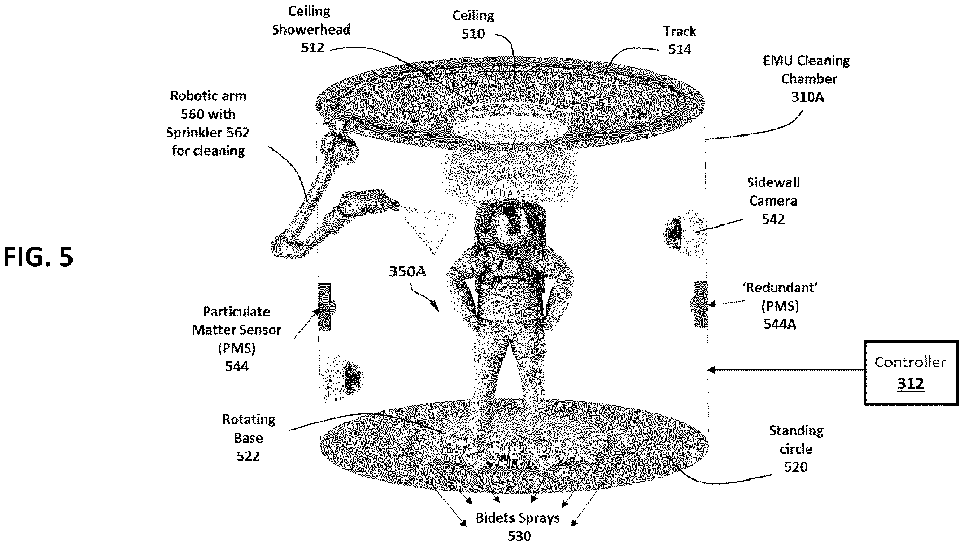

FIG. 2 is a simplified block diagram illustrating a non-limiting example of how the models 112, 114, 116, 118 of the simulation system 110 can be implemented as a simulation system 110A having a physics-informed generative adversarial deep learning (PIGA-DL) model depicted as a generator or physics-informed neural network (PINN) model 210 and a multi-modal discriminator 220, configured and arranged as shown in accordance with embodiments of the disclosure. FIG. 2 depicts how the simulation system 110A can be trained and subsequently used to perform simulations/predictions. In training, the simulation system 110A incorporates image data streams from different angles, in addition to other input parameters such as surface properties, dust characteristics, and cleaning method parameters (e.g., gathered from previous operations of a cleaning system such as the cleaning system 310A shown in FIG. 5) to predict cleaning efficacy on lunar dust contaminated surfaces. The simulation system 110A implements models that combine the strengths of a PINN and generative adversarial networks (GANs).

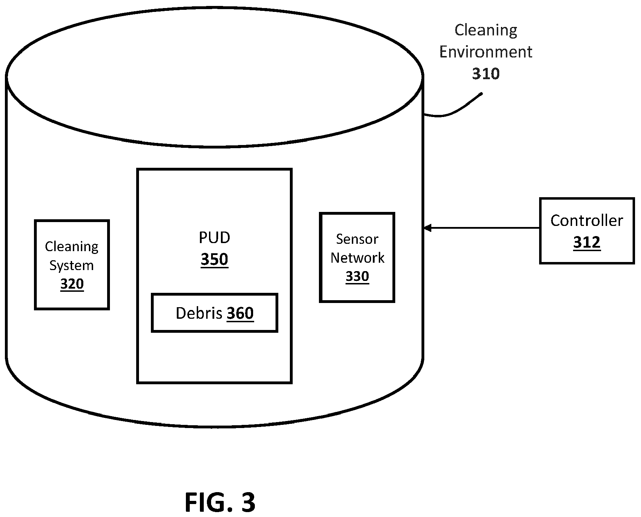

Data collection and preprocessing operations are performed during setup and configuration of the simulation system 110A. The gathering of the experimental data on various cleaning techniques (e.g., electrostatic, or electromagnetic fields, brushes, gas, liquid, or air jets) should be applied to surfaces with different levels of dust accumulation. This data should include surface properties, dust particle characteristics, cleaning method parameters, and the resulting cleaning efficacy. Additionally, image data streams are collected from different angles of view of the cleaning surface to improve the model's understanding of the cleaning process (e.g., as implemented by the cleaning chambers 310, 310A (shown in FIGS. 3 and 5). The data is processed to ensure consistent size, resolution, and format. Normalization, noise reduction, and data augmentation are performed as needed. An example approach to quantifying cleanliness levels in images is by applying a 2D fast Fourier transform (FFT) image filtration technique. This approach can be used to analyze the images data in frequency domain, which as a result can be used to generate a metric of the dust particulates distribution on the surface of the material.

The generator/PINN 210 is a neural network that incorporates the known physics of lunar dust adhesion and charging, such as electrostatic forces and van der Waals forces, as well as the image data streams. Thus, in some embodiments of the disclosure, the simulation system 110A can be designed as a multimodal neural network architecture that can process both image data and other input parameters. This architecture can include two branches, namely a convolutional neural network (CNN) branch for processing image data and a fully connected branch for processing non-image input parameters. The outputs from these branches are combined and passed through additional fully connected layers to generate the final predictions of the simulation system 110A (e.g., predictions of cleaning efficacy of the PUD 350 (shown in FIG. 3). In some embodiments of the disclosure, networks other than CNN can be used, including, for example, LSTM (long short-term memory), BILSTM (bidirectional LSTM), or RNNs (recurrent neural networks).

To design the generator/PINN model 210 in accordance with embodiments of the disclosure, physics-based constraints are added to the loss function 260 of the neural network by incorporating the governing equations that describe the physics of lunar dust adhesion and charging. These equations represent the relationships between the input parameters, image data, and the output(s) (e.g., cleaning efficacy, debris adhesion, debris location, and the like). To use the physics-based model equations in training the network, the neural network's output are differentiated with respect to the input parameters and image data to obtain the gradients (derivatives) 270, 280 of the predicted output(s) (e.g., cleaning efficacy, debris adhesion, debris location, and the like). In this operation, for the image gradients, spatial gradients of images can be generated for filtered images. The gradients 270, 280 are used to formulate physics-based constraints that represent the governing equations in terms of the neural network's output(s) (e.g., cleaning efficacy, debris adhesion, debris location, and the like).

In embodiments of the disclosure, the simulation system 110A is implemented as a GAN architecture having a generator/PINN 210 and a discriminator network 220. The generator's goal is to produce realistic representations of the cleaning efficacy given a set of input parameters (images from different angles, surface properties, dust characteristics, and cleaning method parameters), while the discriminator's goal is to differentiate between the true experimental data and the generated data.

To make the GAN model of the simulation system 110A physics-informed in accordance with embodiments of the disclosure, the generator in the GAN architecture of the simulation system 110A is implemented as the previously-described multimodal PINN 210. The PINN is a type of universal function approximation features that can embed the knowledge of any physical laws that govern a given data-set in the learning process, and can be described by partial differential equations (PDEs). In embodiments of the disclosure, the PINN 210 is multimodal in that it creates a multivariate output(s) (e.g., cleaning efficacy, debris adhesion, debris location, and the like) from input variables encoded into multiple major modalities or categories, including, for example image data, physics-based equations, and the like.

Because the simulation system 110A receives different sets of measurement data, the architecture of the discriminator network 220, in accordance with embodiments of the disclosure, is configured and arranged to be multimodal to accommodate image data inputs from different angles of view of the cleaning surface of the PUD (e.g., PUD 350 shown in FIG. 3). The CNN architecture of the multimodal discriminator 220 is configured to include multiple convolutional layer and pooling layers, followed by one or more fully connected layers to perform the classification task. Implementing the discriminator 220 as a multimodal architecture that can process multiple data type, including image data and other input parameters can be done by having separate branches in the network for processing image data (using the CNN architecture) and non-image data (using fully connected layers). The outputs from these branches can then be combined and processed further to perform the final classification task.

The training of the GAN architecture of the simulation system 110A can be performed in accordance with embodiments of the disclosure using experimental data collected (e.g., real samples 240), which includes both image data streams and other input parameters. The generator network 210 and the discriminator network 220 are trained substantially concurrently, with the generator 210 trying to produce data that can "fool" the discriminator 220 with "fake" samples 242, and the discriminator 220 trying to accurately classify the data as real or generated (i.e., the real/fake decision block 250). The training process continues until the generator 210 can produce realistic predictions of the output(s) (e.g., cleaning efficacy, debris adhesion, debris location, and the like). The trained GAN architecture of the simulation system 100A can be validated using a separate dataset not used during training to assess the performance of the models of the simulation system 110A by comparing its predictions to the actual output(s) (e.g., cleaning efficacy, debris adhesion, debris location, and the like) observed in the validation dataset. In some embodiments of the disclosure, the training of the GAN architecture of the simulation system 110A can include providing random noise 230 to the generator 210. Adding noise during training can make the training process more robust and reduce generalization error. The random noise 230 can be added to the inputs, but can also be added to weights, gradients, and even activation functions. The random noise 230 is not used during normal, non-training operations of the simulations system 110A.

In some embodiments of the disclosure, the trained simulation system 110A can be used to optimize cleaning techniques for different surfaces and dust accumulation scenarios. This can involve adjusting the cleaning method parameters or selecting the most appropriate cleaning method based on the predicted cleaning efficacy. Additionally, a sensitivity analysis can be performed to determine the most influential input parameters, including image data, on cleaning efficacy predictions.

Accordingly, in embodiments of the disclosure, the simulation system 110A can be implemented as a physics-informed generative adversarial deep learning model with image data streams for predicting debris-related properties of the PUD 350 (shown in FIG. 3), including, for example, cleaning efficacy on lunar dust contaminated surfaces. By incorporating image data streams from different angles and other input parameters, the novel GAN architecture of the simulation system 110A provides a robust and reliable tool for predicting the cleaning efficacy of various methods on surfaces contaminated with lunar dust particles. The inclusion of known physics of lunar dust adhesion and charging in the generator 210 assists with generating predictions having increased reliability and accuracy over known GAN architectures, while the adversarial training process with the discriminator 220 ensures that the model(s) of the simulation system 110A learn the complex, hard-to-predict relationships between the input parameters, image data, and cleaning efficacy, and the like from the available data.

The novel simulation system 110A can be used in the development and optimization of lunar dust mitigation strategies and contribute to the overall success of lunar exploration missions. By providing a comprehensive framework for predicting cleaning efficacy and other debris-related properties based on both image data and non-image input parameters, researchers and engineers can focus on designing and implementing effective PUDs and cleaning techniques that minimize the adverse effects of lunar dust on equipment and personnel.

FIG. 3 depicts a non-limiting example of a cleaning environment 310 that can be modeled by the cleaning system model 118 (shown in FIG. 1). The cleaning environment 310 includes a cleaning system 320, a sensor network 330, and a controller 312 operable to control the various operations performed by the cleaning environment 310. In embodiments of the disclosure, the controller 312 can be implemented using the computing system 900 (shown in FIG. 9) operable to execute the various algorithms that control the various operations performed by the cleaning environment 310. A PUD 350 having debris 360 that needs to be cleaned from the PUD 350 can be placed within the cleaning environment 310 for cleaning by the cleaning system 320. The debris 360 can be lunar regolith or any other type of dust as long as it can be detected and localized.

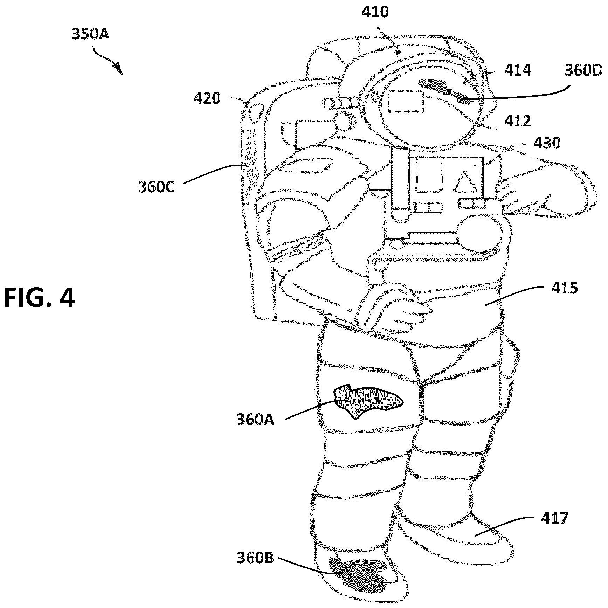

FIG. 4 is a diagram illustrating a non-limiting example of how the PUD 350 (shown in FIG. 3) can be implemented as an EMU 350A that can be designed and virtually tested through simulations utilizing the simulation system 110 in accordance with embodiments of the disclosure. The EMU 350A includes a helmet 410, an extravehicular visor assembly 414, a full-body suit 415, boots 417, a primary life support system (PLSS) 420, and a display and control module (DCM) 430, configured and arranged as shown. A display 412 is indicated within the helmet 410. Debris in the form of lunar regolith 360A-360D is represented diagrammatically on the EMU 350. In accordance with aspects of the disclosure, the lunar regolith 360A-360D represents the amount, location, and type of lunar regolith that is on the EMU 350 after the tasks are completed. The manner in which the lunar regolith 360A-360D is depicted in FIG. 4 is for ease of illustration and explanation is not intended to illustrate all of the locations and ways in which lunar regolith can be present on the EMU 350A. In embodiments of the disclosure, the diagram shown in FIG. 4 can be represented as part of the video simulations 150 shown in FIG. 1.

FIG. 5 is a diagram illustrating a non-limiting example of how the cleaning environment 310 (shown in FIG. 3), which is modeled by the cleaning system model 118 (shown in FIG. 1), can be implemented as an EMU cleaning chamber 310A having the controller 312 operable to perform that various operations to clean the EMU 350A in accordance with embodiments of the disclosure. The EMU cleaning chamber 310A includes a ceiling 510; a ceiling showerhead 512; a ceiling track 514 operable to have movably mounted thereon a robotic arm 560; a standing circle base 520; a rotating base 522; a network of bidet sprays 530; particulate matter sensors (PMS) 544; redundant PMS 544A; sidewall cameras 542; and the robotic arm 560 with a sprinkler 562 mounted at its end used to scan and clean the EMU 350A to ensure complete coverage of the whole EMU 150A, configured and arranged as shown. The rotating base 522 can be coordinated with operations performed by the robotic arm 550 to enhance/simplify the reach of the robotic arm 560 and improve cleaning operations of the sprinkler 462. In some embodiments of the disclosure, more than one instance of the robotic arm 560 and the sprinkler 562 can be provided. In some embodiments of the disclosure, a speed parameter of the rotating base 522 is controlled (e.g., through the controller 312) such that the speed parameter is below a user-comfort threshold. The user-comfort threshold is a predetermined maximum rotation speed that can be tolerated by the user/astronaut in the EMU 350A without the user/astronaut experiencing discomfort from the rotation speed. In some embodiments of the disclosure, the cleaning chamber 310A and/or the EMU 350A can include a communication system that allows the user/astronaut in the EMU 350A to indicate to the controller 312 that the user/astronaut is experiencing discomfort, and the controller 312 can be operable to, responsive to such a communication from the user/astronaut, reduce the speed parameter even when the speed parameter is blow the previously set user-comfort threshold. Data generated by the various components of the EMU cleaning chamber 310A, including specifically, the PMS elements 544, 544A and the cameras 542 are captured by the simulation system 110 and used to generate and compute the PUD/Task/Debris cleaning efficacy map/score 170.

In some embodiments of the disclosure, additional components of the cleaning chamber 3 10A can be configured and arranged such that the components can be moved as an alternative to (or in addition to) the movement of the rotating base 522. For example, a wall element on which the PMS 544, 544A and the sidewall cameras 542 can be operable to move (e.g., rotate) to position the PMS 544, 544A and the sidewall cameras 542 in a manner that supplements or replaces the need to move the user/astronaut (positioned inside the EMU 350A) and the EMU 350A by rotating the rotating base 522 to execute cleaning operations. Additionally, the ceiling 510 can be moved to achieve a desired position of the robotic arm 560 as an alternative to (or in addition to) the movement of the robotic arm 560 along the track 514.

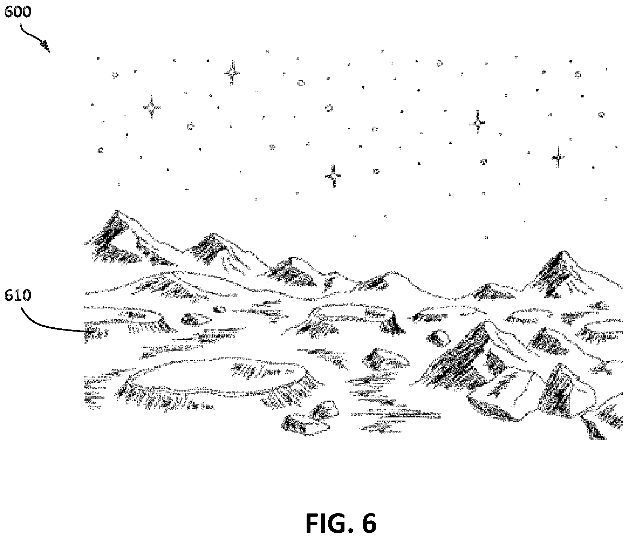

FIG. 6 depicts a diagram illustrating a non-limiting example the Moon 600, which is a non-limiting example of a unique and hard-to-predict environment having multi-factor stressors. For example, the exploration of the Moon and the establishment of lunar bases pose several unique and hard-to-predict challenges, one of which is dealing with a lunar surface 610 that is covered by a layer of unconsolidated debris called lunar regolith (dust) (e.g., the lunar regolith 360A-360D shown in FIG. 4). Lunar regolith or lunar dust is abrasive like sandpaper, jagged like volcanic ash, and clings like fire soot. The fine, abrasive nature of lunar dust and its ability to adhere to surfaces can cause damage to equipment, reduce the efficiency of solar panels, and pose health risks to astronauts and/or other users.

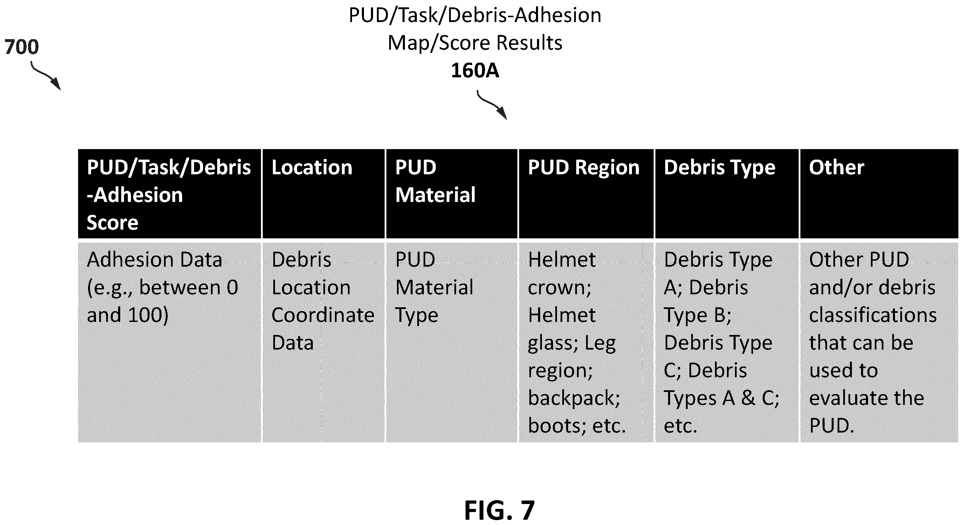

FIG. 7 depicts a table 700 illustrating a non-limiting example of how the PUD/Task/Debris-Adhesion map/score 160 (shown in FIG. 1) can be implemented as PUD/Task/Debris-Adhesion map/score results 160A. As shown, the PUD/Task/Debris-Adhesion map/score results 160A include a regolith/debris adhesion score; regolith/debris location coordinate data; PUD material type; PUD regions; regolith/debris type; and any other suitable PUD and/or debris classifications that can be used to evaluate PUD.

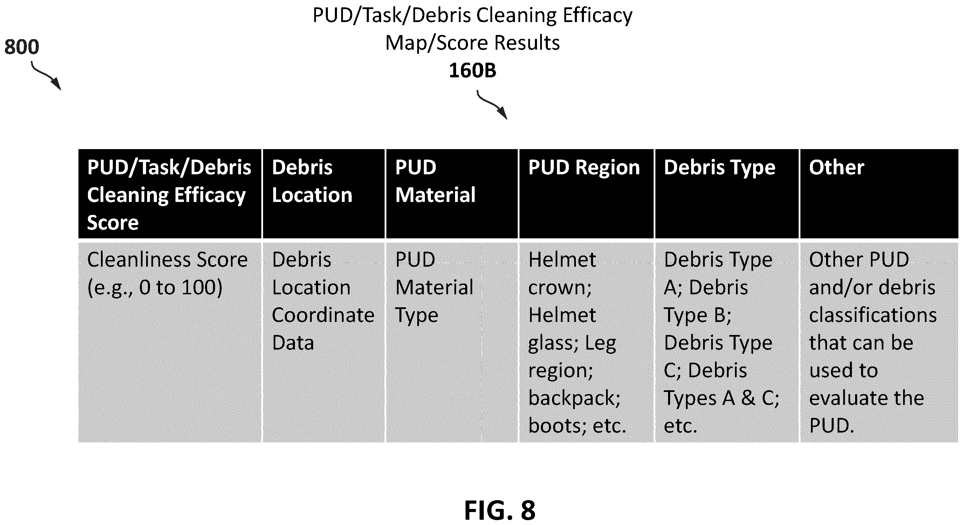

FIG. 8 depicts a table 800 illustrating a non-limiting example of how the PUD/Task/Debris cleaning efficacy map/score 160 (shown in FIG. 1) can be implemented as PUD/Task/Debris cleaning efficacy map/score results 160B. As shown, the PUD/Task/Debris cleaning efficacy map/score results 160B include a cleanliness score; regolith/debris location coordinate data; PUD material type; PUD regions; regolith/debris type; and any other suitable PUD and/or debris classifications that can be used to evaluate PUD.

FIG. 9 illustrates an example of a computer system 900 that can be used to implement the computer-based components in accordance with aspects of the disclosure. The computer system 900 includes an exemplary computing device ("computer") 902 configured for performing various aspects of the content-based semantic monitoring operations described herein in accordance aspects of the disclosure. In addition to computer 902, exemplary computer system 900 includes network 914, which connects computer 902 to additional systems (not depicted) and can include one or more wide area networks (WANs) and/or local area networks (LANs) such as the Internet, intranet(s), and/or wireless communication network(s). Computer 902 and additional system are in communication via network 914, e.g., to communicate data between them.

Exemplary computer 902 includes processor cores 904, main memory ("memory") 910, and input/output component(s) 912, which are in communication via bus 903. Processor cores 904 includes cache memory ("cache") 906 and controls 908, which include branch prediction structures and associated search, hit, detect and update logic, which will be described in more detail below. Cache 906 can include multiple cache levels (not depicted) that are on or off-chip from processor 904. Memory 910 can include various data stored therein, e.g., instructions, software, routines, etc., which, e.g., can be transferred to/from cache 906 by controls 908 for execution by processor 904. Input/output component(s) 912 can include one or more components that facilitate local and/or remote input/output operations to/from computer 902, such as a display, keyboard, modem, network adapter, etc. (not depicted).

A cloud computing system 50 is in wired or wireless electronic communication with the computer system 900. The cloud computing system 50 can supplement, support or replace some or all of the functionality (in any combination) of the computer system 900. Additionally, some or all of the functionality of the computer system 900 can be implemented as a node of the cloud computing system 50.

Many of the functional units of the systems described in this specification have been labeled as modules. Embodiments of the disclosure apply to a wide variety of module implementations. For example, a module can be implemented as a hardware circuit including custom VLSI circuits or gate arrays, off-the-shelf semiconductors such as logic chips, transistors, or other discrete components. A module can also be implemented in programmable hardware devices such as field programmable gate arrays, programmable array logic, programmable logic devices or the like. Modules can also be implemented in software for execution by various types of processors. An identified module of executable code can, for instance, include one or more physical or logical blocks of computer instructions which can, for instance, be organized as an object, procedure, or function. Nevertheless, the executables of an identified module need not be physically located together, but can include disparate instructions stored in different locations which, when joined logically together, function as the module and achieve the stated purpose for the module.

The various components/modules/models of the systems illustrated herein are depicted separately for ease of illustration and explanation. In embodiments of the disclosure, the functions performed by the various components/modules/models can be distributed differently than shown without departing from the scope of the various embodiments of the disclosure describe herein unless it is specifically stated otherwise.

Aspects of the disclosure can be embodied as a system, a method, and/or a computer program product at any possible technical detail level of integration. The computer program product may include a computer readable storage medium (or media) having computer readable program instructions thereon for causing a processor to carry out aspects of the present disclosure.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A computer system comprising a processor system electronically coupled to a memory, wherein the processor system performs processor system operations comprising:
accessing configuration information of a product-under-development "PUD";
providing the configuration information of the PUD to one or more physics-informed simulation models "PISMs" of the processor system; and
using the one or more PISMs to predict debris-related properties of the PUD operating in an environment.

2. The computer system of claim 1, wherein the environment comprises a hard-to-predict environment having multi-factor stressors comprising debris.

3. The computer system of claim 2, wherein the debris is circulating and comprises multiple debris types.

4. The computer system of claim 1, wherein the processor system operations further comprise computer-aided-design "CAD) operations that simulate the debris-related properties of the PUD in the environment.

5. The computer system of claim 4, wherein the environment comprises a hard-to-predict environment having multi-factor stressors comprising debris, and optionally wherein the debris comprises multiple debris types.

6. The computer system of claim 1, wherein debris-related properties of the PUD in the environment comprise a score representing how difficult it would be for a cleaning system to remove some or all of debris present on the PUD.

7. A computer-implemented method comprising:
accessing, using a processor system, configuration information of a product-under-development "PUD";
providing the configuration information of the PUD to one or more physics-informed simulation models "PISMs" of the processor system; and
using the one or more PISMs to predict debris-related properties of the PUD operating in an environment.

8. The computer-implemented method of claim 7, wherein the environment comprises a hard-to-predict environment having multi-factor stressors comprising debris, or wherein the debris is circulating and comprises multiple debris types.

9. The computer-implemented method of claim 7, wherein the processor system operations further comprise computer-aided-design "CAD" operations that simulate the debris-related properties of the PUD in the environment, and optionally wherein:
the environment comprises a hard-to-predict environment having multi-factor stressors comprising debris; and
the debris comprises multiple debris types.

10. The computer-implemented method of claim 8, wherein debris-related properties of the PUD in the environment comprise a score representing how difficult it would be for a cleaning system to remove some or all of debris present on the PUD.

11. A computer system comprising a processor system electronically coupled to a memory, wherein the processor system performs processor system operations comprising:
accessing configuration information of a product-under-development "PUD", wherein the PUD comprises an extravehicular mobility unit "EMU";
providing the configuration information of the EMU to one or more physics-informed simulation models "PISMs" of the processor system; and
using the one or more PISMs to predict debris-related properties of the EMU in a space environment.

12. The computer system of claim 11, wherein the space environment comprises a hard-to-predict space environment having multi-factor stressors comprising debris, and optionally wherein the debris is circulating and comprises lunar regolith.

13. The computer system of claim 11, wherein the processor system operations further comprise computer-aided-design "CAD" operations that simulate the debris-related properties of the EMU in the space environment, and optionally wherein:
the space environment comprises a hard-to-predict space environment having multi-factor stressors comprising debris; and
the debris comprises lunar regolith.

14. The computer system of claim 11, wherein debris-related properties of the EMU in the space environment comprise a score representing how difficult it would be for a cleaning system to remove some or all of debris from the EMU.

15. The computer system of claim 11, wherein the one or more PISMs comprise a generative adversarial network having a physics-informed generator and a multimodal discriminator.
